# EUROPÄISCHE PATENTSCHRIFT

(11) **EP 1 998 097 B1**
(45) Veröffentlichungstag und Bekanntmachung des Hinweises auf die Patenterteilung: **09.09.2020**
(21) Anmeldenummer: 08009238.0
(22) Anmeldetag: 20.05.2008
(51) Int. Cl.: F16L 37/34

(54) **Rohrkupplung, Verfahren zum Rohrkuppeln, und zur Selbstreinigung von Kupplungshälften beim Rohrkuppeln**
Pipe coupling, process for coupling pipes and for self-cleaning coupling halves when coupling pipes
Accouplement tubulaire, procédé d'accouplement tubulaire et de nettoyage automatique de moitiés d'accouplement lors de l'accouplement tubulaire

(30) Priorität: 24.05.2007 DE 102007025787
(43) Veröffentlichungstag der Anmeldung: 03.12.2008
(73) Patentinhaber: FASTER S.r.l., 26027 Rivolta d'Adda (IT)
(72) Erfinder: Sauer, Thomas, 72581 Dettingen/Erms (DE)
(74) Vertreter: Torti, Carlo Maria Emilio

(56) Entgegenhaltungen:
- EP-A1- 0 686 801
- DE-A1- 2 847 901
- DE-C1- 19 951 885
- FR-A- 1 362 459
- US-A- 5 788 291
- US-A1- 2005 265 877

## Beschreibung

Die Erfindung betrifft eine Rohrkupplung, bestehend aus an Rohrenden befindlichen Kupplungshälften, nämlich aus Muffe und Stecker.
Zum Verbinden und Trennen von medienführenden Rohren, Schläuchen oder dergleichen, werden heute zunehmend leckölarme Flachdichtkupplungen, auch Flat-Facc-Kupplungen genannt, eingesetzt, welche aus zwei ineinandersteckbaren Kupplungshälften, aus Stecker und Muffe, bestehen. Flat-Face-Kupplungshälften zeichnen sich durch jeweils ebenflächige Stirnseiten aus, welche sich vor einem Kupplungsvorgang leicht reinigen lassen, außerdem sind sie leckölarm, da während dem Kuppeln, oder beim Entkuppeln kein Öl ins Freie geleitet werden muß.
Das Ineinanderschieben und Halten von Kupplungshälften kann manuell oder mittels Vorrichtungen erfolgen, wie durch Schraubverbindungen, Steckverbindungen mit Schnappverschlüssen, Exzenterantrieben, medienbeaufschlagten Zylinder-Kolben-Einheiten oder dergleichen.
Beim Ineinanderschieben der Rohrenden mit ihren daran befindlichen Kupplungshälften, wird die insgesamte Rohrlänge nachteiligerweise um den Einschubweg verkürzt, was eine Reduzierung des ursprünglichen Rohrvolumens bedeutet, und somit eine zwanghafte Verdichtung beinhalteter Medien erfordert.
Befinden sich in den Rohren schwer komprimierbare, oder schon vorher unter Druck stehende Medien, wie Wasser oder Öl, erfordert der Rohrkupplungsvorgang sehr viel Kraft. Oftmals ist eine Rohrverbindung nicht zu erstellen, weil die zur Verfügung stehende Ineinanderschiebkraft der Kupplungsvonichtungen nicht ausreicht, um die notwendige Kraft zur Medienverdichtung bereitzustellen.
An Baustellenfahrzeugen werden diese Kupplungsprobleme oft durch ein nicht erlaubtes Ablassen von überschüssigem Öl aus Rohrleitungen, in die freie Natur gelöst, was eigentlich nicht geduldet werden kann.
Neuerdings gibt es technische Lösungsversuche, wie beispielsweise ein im DE-GM 202006014061.1 beschriebener Kupplungsstecker, welche darauf abzielen, die beschriebene insgesamte, notwendige Rohrverkürzung beim Rohrverbinden, in einen ersten, möglichst großvolumigen Bereich einer leicht möglichen Luftkompression, und in einen restlichen, möglichst kleinvolumigen Bereich, einer Fluidkompression aufzusplitten.
Wie sich in der Praxis herausstellt, wird die Erreichung der notwendigen Medienkompression zwar erleichtert, aber für einen problemlosen Betrieb ist das noch nicht ausreichend. Speziell bei großvolumigen Rohren ist diese volumingesplittete Medienverdichtung mit herkömmlichen Ineinanderschiebvorrichtungen nicht zu erreichen.
Ein weiterer herkömmlicher Lösungsversuch, ebenfalls in der DE-GM 202006014061.1 zu sehen, besteht darin, dass mittels eines kleinen, sich während des gesplitteten Kompressionsweges öffnenden Druckentlastungsventiles, Mediendruck aus der Steckerseite in die Muffenseite entweichen kann, und sich somit evtl. differierende Mediendrücke ausgleichend absenken können.
Auch dieses Hilfsmittel erreicht nur bedingt und sehr begrenzt Erleichterung beim Verbinden von Kupplungshälften.
DE 28 47 901 A1, DE 199 51 885 C1 und EP 0 686 801 A1 zeigen weitere bekannte Rohrkupplungen.

Aufgabe der Erfindung ist es deshalb, eine bestmöglich flachdichtende, leckölarme Rohrkupplung vorzuschlagen, welche beim Verbinden von Kupplungshälften keine Rohrverkürzung, und somit keine Medienverdichtung, verursacht. Die Einzelteile der Rohrkupplung sollen so gestaltet sein, dass selbst bei Hochdruck in einem oder in beiden Rohren, eine leichte Bedienung, und ein druckdichter und zerstörungsfreier Betrieb gewährleistet ist.

Die Aufgabe wird durch die Ansprüche gelöst.

Demnach weisen beide Kupplungshälften hülsenförmige Absperrelemente auf, welche sich ohne Medienverdichtung, oder ohne nennenswerte Medienverdichtung in ihre möglichen Endpositionen "auf" und "zu" verschieben lassen. Wird ein hülsenförmiges Absperrelement teleskopartig verlängernd aus einer Kupplungshälfte, in eine andere, vorher gegenseitig positionierte Kupplungshälfte hineingeschoben, wird dadurch das andere hülsenförmige Absperrelement teleskopartig mitgenommen, sodass beide Absperrhülsen geöffnet sind, nachdem sie sich durch eine erste Hülsenübereinanderschiebung druckdicht verbunden hatten.

Eine Kupplungshälfte besteht aus einem Stecker, welcher eine teleskopartig hinausschiebbare Absperrhülse aufweist. Die Absperrhülse hat eine innere, beidseitig druckdicht abgeschlossene Hülsenaufweitung, welche seitliche Medienausgänge am steckerseitigen Rohrende, meiner geschlossenen Position, absperren kann. Zur Verschiebung und zum Halten dieser Absperrhülse in den zwei gewünschten Positionen, nämlich "auf" oder "zu" sind Bewegungsmittel, wie eines Exzenterantriebes vorgesehen.

Die Muffe hat ebenfalls einen hülsenförmigen, federbeaufschlagten Schieber als Absperrelement, welcher sich bei getrennter Rohrkupplung selbsttätig schließt.

Zum Verbinden der Kupplungshälften werden Stecker und Muffe in einem ersten Arbeitsschritt manuell so zueinander positioniert dass sich die ebenflächigen Stirnseiten ohne nennenswerten Zwischenraum gegenüberstehen, und sich axial nicht mehr voneinander entfernen können.
Bestmöglich sind die Haltemittel zum manuellen Positionieren der Kupplungshälften so angeordnet, dass bei einer Ineinanderhakbewegung, die Stirnflächen der Kupplungshälften aneinander vorbeistreifen müssen, und sich dabei von grobem Schmutz selbstreinigen.

In einem zweiten Arbeitsschritt wird die steckerseitige Absperrhülse, mittels Bewegungsmittel aus der Position "zu" in die Position "auf" geschoben, die Absperrhülse bewegt sich zwangsläufig, teleskopartig hinausfahrend in die axial fluchtend, vorher positionierte Muffe hinein. Dabei überfährt die steckerseitige Absperrhülse mit ihrer vorderen Dichtfläche das steckerseitige Rohrende und schiebt sich abdichtend über die muffenseitige Absperrhülse, bis zu einem Anschlag, und schiebt in ihrem weiteren Einschubweg die an diesem Anschlag liegende, muffenseitige Absperrhülse, zwangsläufig aus der geschlossenen, in die geöffnete Position, mit.
Die Rohrkupplung ist somit Verbunden. Es fand erfindungsgemäß keine Rohrverkürzung statt. Das Rohrvolumen ist gleich geblieben, es gab somit keine kuppelbedingte Medienverdichtung. Der Kupplungsvorgang ist unabhängig von Medienzuständen mit wenig Kraftaufwand zu bewerkstelligen

Es sind Sicherungsmittel vorgesehen, welche eine unbeabsichtigte Betätigung der steckerseitigen Absperrhülse verhindern.

Obwohl die beschriebene Rohrkupplung keine Medienverdichtung beim Kupplungsvorgang verursacht, kann eine geringfügig gewünschte Medienverdichtung dadurch erreicht werden, dass die stecker- und/oder muffenseitigen Absperrhülsen zwei leicht unterschiedlich große Dichtflächen aufweisen, und somit einen kleinvolumigen Medienhubraum bilden. Es reicht aus, wenn die Dichtringdurchmesser, beispielsweise, nur zehntelmillimeterweise differieren. Die sich daraus ergebende Druckmittelbeaufschlagung, kann für eine gezielte zusätzliche Absperrhülsenbeaufschlagung, in Schließrichtung, genutzt werden, die jedoch der eigentlichen Aufgabe einer Rohrvolumengleichbleibheit bei einer Rohrkupplung, keinen Schaden zufügen.

Die Kupplungshälften der beschriebenen Rohrkupplung können jeweils stationär an Maschinen, oder mobil an anbaugeräteseitigen Schläuchen angeordnet sein.

Die Erfindung wird anhand der Zeichnungen erklärt:

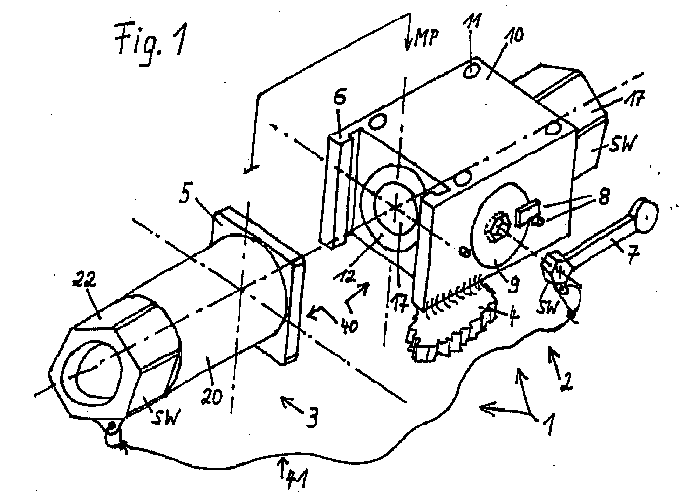

Fig. 1 zeigt: Eine perspektifisch gezeichnete Rohrkupplung (1), bestehend aus zwei Kupplungshälften, einem Stecker (2) und einer Muffe (3), in getrenntem Zustand. Die Muffe (3) hat ein Muffengehäuse (20), mit einem stirnseitigen, hier vierkantigen Flansch (5) welcher als Haken benützt werden kann, und einem heckseitigen Rohranschluß (22) mit Schlüsselweite (SW) zum Befestigen einer anbaugeräteseitigen Schlauchleitung. Der Stecker (2) ist mit einem Steckergehäuse (10) ortsfest an einer Maschine (4) angeschweißt, und hat einen heckseitigen Rohranschluß (17) mit Schlüsselweite (SW) zur Befestigung weiterleitender Rohre oder Schläuche oder dergleichen, und eine stirnseitige Hakenschiene (6), welche sich zur Aufnahme der mobilen Muffe (3) an Flansch (5) eignet.
   Im stirnseitigen Zwischenbereich der Hakenschiene (6) sieht man die ebenflächig positionierte Absperrhülse (12) und das zentral feststehende Rohrende (17).
   An einer Seite des Steckergehäuses (10) sind die Bewegungs- und Betätigungsmittel für die AbsperrhüJse (12) installiert Mittels eines steckbaren Hebels (7) lässt sich ein Exzenterrad (9) innerhalb seiner Anschläge (8) in zwei Endpositionen verdrehen. Das Exzenterrad (9) hat seinen Exzenter (36) im Steckergehäuse (10) wirkend. Das Exzenterrad (9) ist hier gewindegelagert.
   Das manuelle Positionieren (MP) des mobilen Muffenteils (3) im ortsfesten Steckergehäuse (1) ist anhand des Pfeiles nachvollziehbar, dabei kann das Maschinenteil (4) einen unteren Anschlag in der Hakenschiene (6) bilden.
   Der steckbare Hebel (7), zur Betätigung der steckerseitigen Absperrhülse (12), ist mit einem Sicherungsseil (41) an der mobilen Muffe (3) befestigt, somit kann die Rohrkupplung nur betätigt werden, wenn Muffe und Stecker beieinander sind.
   Ein unbeabsichtigtes Offnen des Steckers wird dadurch verhindert.
   Unabhängig von dieser Zeichnung, kann auch der Stecker (2) als mobile Kupplungshälfte ausgebildet sein, genauso wie auch die Muffe (3) ortsfest einer Maschine (4) zugeordnet sein kann. Auch Haltemittel, wie Haken (5) und Hakenschiene (6) können beliebig an Stecker oder Muffe angeordnet sein.

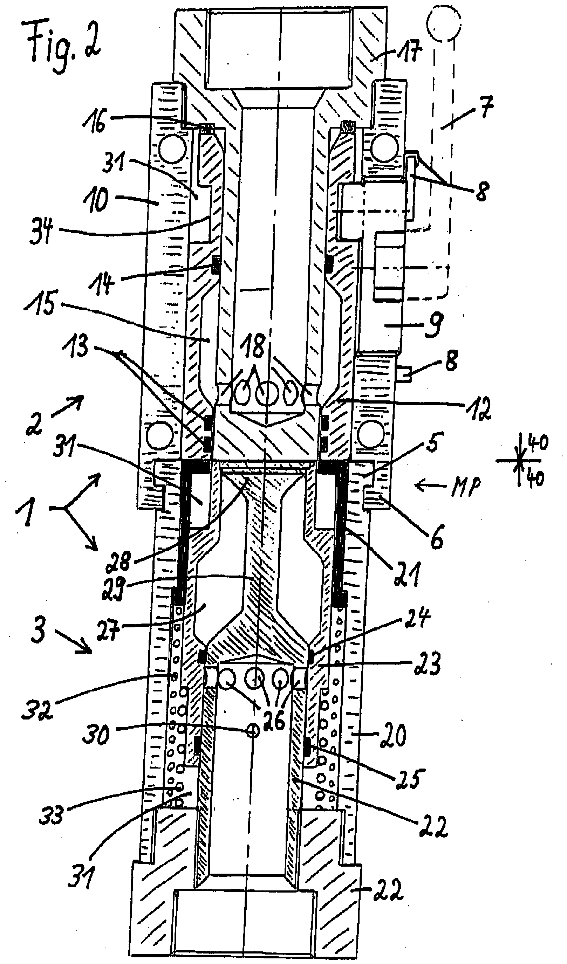

Fig. 2 zeigt: Eine im Schnitt gezeichnete Rohrkupplung (1) in der Draufsicht, wobei Stecker (2) und Muffe (3) mittels Hakenschiene (6) und Hakenflanscb (5) so miteinander verhakt sind, dass sich die Kupplungshälften nicht axial voneinander entfernen können.
   Beide Kupplungshälften haben druckdicht geschlossene hülsenförmige Absperrelemente, wobei die muffenseitige Absperrhülse (23) selbsttätig, federbeaufschlagt (33) geschlossen ist, und die steckerseitige Absperrhülse (12) an einer Ausnehmung (34) durch Excenter (36) gehalten wird. Der Exzenter (36) kann durch ein Verdrehen des Exzenterrades (9) im Gewinde (35), diese steckerseitige Absperrhülse (12) in seine Endpositionen bringen und halten, dabei können Puffer (16) zusätzliche Klemmkraft bewirken.
   Der Stecker (2) hat ein Steckergehäuse (10), welches fest mit dem Rohranschluß und Rohrende (17) verbunden ist. Am Rohrende (17) befinden sich seitliche Medienausgänge (18), welche hier, durch Absperrhülse (12) mittels Dichtringe (13), und Dichtring (14) druckdicht verschlossen sind.
   Vorteilhafterweise sind die Durchmesser der Dichtringe (13 und 14) gleich groß, sodass eine beabsichtigte Verschiebung der Absperrhülse (12) ohne Medienkompression möglich ist.
   Der Dichtring (14) kann erfindungsgemäß auch geringfügig größer sein als Dichtring (13), um eine leichte zusätzliche Absperrhülsenbesufschlagung in Schließrichtung zu erhalten. Dieser Unterschied im Dichtringdurchmesser kann auch nur zehntelmillimeterweise bestehen, und tut der ursprünglich beabsichtigten Durchmessergleichheit keinen Abbruch.
   Das Exzenterrad (9) befindet sich in seinem rechten Anschlag, und somit in einer geschlossenen Position der Absperrhülse (12).
   Das Steckergehäuse (10) hat vier Bohrungen (11) für eine mögliche Schraubenbefestigung zu einem Maschinenteil (4) hin.
   Die Muffe (3) hat ein Muffengehäuse (20), welches fest mit dem Rohranschluß und Rohrende (22) verbunden ist. Das Rohrende weist seitliche Medienausgänge (26,30), und einen verlängerten Schaft (29) mit kegelförmigem Schaftende (28) auf, wobei die seitlichen Medienausgänge (26 und 30) durch die Absperrhülse (23), mit ihren abschließenden Dichtringen (24 und 25), druckdicht verschlossen sind. Im vorderen Bereich des kegelförmigen Schaftendes (28) wird das dort (27) befindliche Medium, bestmöglich metallisch gegen das stirnseitige Ende der Absperrhülse (23) verschlossen. In diesem Medienraum der Hülsenaufweitung (27) und des verjüngten Schaftes (29) befindet sich nur druckfreies Medium, da die eigentliche Rohrabsperrung im Bereich der seitlichen Medienausgänge (26) stattfindet.
   Die Dichtringe (24 und 25) haben einen gleich großen, oder einen in etwa gleich großen Durchmesser, damit bei einer beabsichtigten Verschiebung der Absperrhülse (23) keine Medienkompression verursacht wird.
   Dichtring (25) kann jedoch auch geringfügig größer sein, als Dichtring (24), damit ist eine zusätzliche druckmittelabhängige Beaufschlagung der federbeaufschlagten (33) Absperrhülse (23) in Schließrichtung gewährleistet. Dieser Unterschied im Dichtringdurchmesser kann auch nur zehntelmillimeterweise bestehen, und tut der ursprünglich beabsichtigten Durchmessergleichheit keinen Schaden.
   Zwischen Muffengehäuse (20) und Absperrhülse (23) befindet sich noch eine federbeaufschlagte (32) Schmutzschutzhülse (21), welche ebenflächig an der Stirnseite (40) der Muffe (3) endet. Die Schmutzschutzhülse (21) hat gegen ihre FederbeaufschJagung (32) einen ersten möglichen freien Einfahrweg bis sie zu einem Anschlag an Absperrhülse (23) kommt, und hat dann einen weiteren möglichen Einfahrweg bis zu ihrer Endposition, indem sie die angeschlagene Absperrhülse (23), auch gegen deren Beaufschlagung (33) mitführt.
   Der Flansch (5) der Muffe (3) zum Einfahren in eine Hakenschiene (6) kann rund oder kantig gestaltet sein.

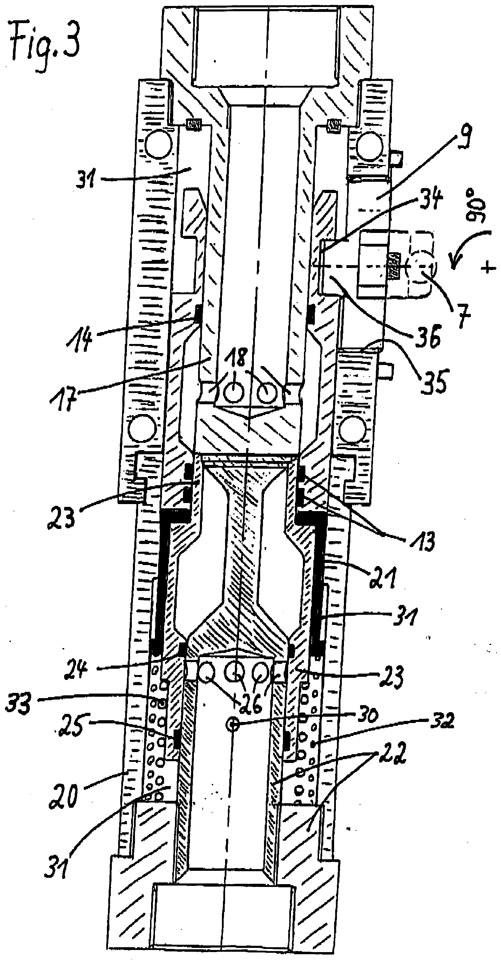

Fig. 3 zeigt: Die Rohrkupplung (1) der Fig.2, allerdings in einer teilweise getätigten steckerseitigen Absperrhülsenbewegung (12).
   Dazu wurde der Betätigungshebel (7) um ungefähr 90° verdreht, wobei Exzenter (36) die steckerseitige Absperrhülse (12) in der Ausnehmung (34) beaufschlagte, und so aus einer Exzenterdrehbewegung eine translatorische Ausschubbewegung der Absperrhülse (12) bewirkt wurde.
   Da die zwei Kupplungshälften (2 und 3), vorab manuell stirnseitig zueinander positioniert wurden, ist die ausfahrende Absperrhülse (12) direkt in die axial fluchtende Stirnseite (40) der Muffe (3) eingefahren, und hat dabei die Schmutzschutzhülse (21) bis zu einem Anschlag an der muffenseitigen Absperrhülse (23) zurückgeschoben. Gleichzeitig hat sich die steckerseitige Absperrhülse (12) über die muffenseitige Absperrhülse (23) geschoben, und ermöglicht durch mindestens einen Dichtring (13) eine druckdichte Hülsenverbindung.
   Der Kraftaufwand zum Betätigen des Hebels (7) ist gering, da keine nennenswerten Druckmittelbeaufschlagungen entgegenstehen können.

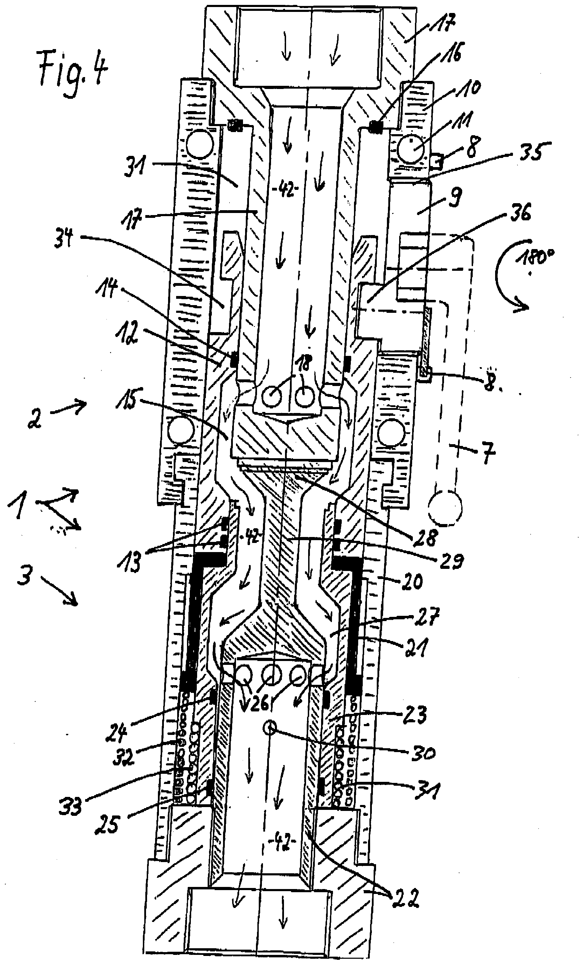

Fig. 4 zeigt: Die Rohrkupplung (1) der Fig. 2 und Fig. 3, allerdings in vollständig getätigter Abspenhülsenbewegung, und somit in der beabsichtigten mediengeöffneten (42) Rohrverbindung.
   Dazu wurde der Betätigungshebel (7) um ungefähr weitere 90°, in einen weiteren möglichen Anschlag (8) verdreht, wodurch der Exzenter (36) die steckerseitige Absperrhülse (12) in seine ausgefahrene Endposition hinausbeförderte, wobei diese weitere Ausfahrbewegung eine gleichzeitige weitere Einfahrbewegung in die sich axial nicht entfernen könnende Muffe (3) bedeutete. Dadurch hat die steckerseitige Abspenhülse (12), die muffenseitige Schmutzschutzhülse (21) mitsamt der angeschlagenen muffenseitigen Absperrhülse (23) gegen ihre Federbeaufschlagungen (32,33) zurückgeschoben.
   Die zueinander abgedichteten Absperrhülsen (12 und 23) gewähren über ihre inneren Hülsenaufweitungen (15 und 27) einen geöffneten Mediendurchflusskanal (42) zwischen den seitlichen Medienausgängen (18 und 26) der beiden Rohrenden (17 und 22).
   Ein kleiner Medienausgang (30) hat Korrespondenz zum Zwischenraum der Dichtringe (24 und 25) und kann geringfügig vorhandene Dichtringgrößen (24,25) so beaufschlagen, dass eine evtl. schlagartig erwünschte Schließung der Absperrhülse (23) zusätzlich zur Federbeaufschlagung auch noch eine druckabhängige Medienbeaufschlagung bietet.
   Der Kraftaufwand zum Betätigen des Hebels (7) ist auch hier gering, da keine nennenswerten Druckmittelbeaufschlagungen anliegen können. Auch der Kraftaufwand zum Halten der Rohrverbindung ist gering, da die Kräfte der auseinanderstebenden Rohre durch Haken (5) und Hakenschiene (6) axial gehalten werden.
   Die Fig. 2 bis 4 zeigen die Erstellung einer Rohrverbindung in drei Schritten. Das Trennen der Rohrkupplung (1) ist in umgekehrter Reihenfolge vorzunehmen.

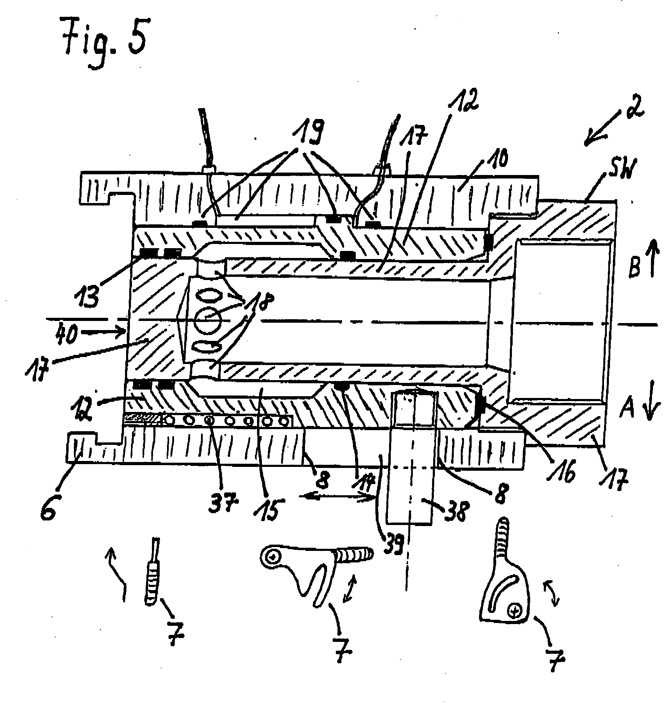

Fig. 5 zeigt: Eine Kupplungshälfte einer Rohrverbindung (1), nämlich einen Stecker (2) im Schnitt gezeichnet, in Draufsicht, wobei die gezeichneten Hälften (A und B) verschiedene Bewegungs- und Haltemittel der Absperrhülse (12) aufweisen.

Die Hälfte (A) zeigt eine druckmittelbetriebene Zylinder-Kolben-Einheit (19), mit entsprechenden Versorgungsleitungen.

Die Hälfte (B) zeigt eine federbeaufschlagte und manuell bewegbare Absperrhülsen (12). Die manuelle Bewegbarkeit der Absperrhülse (12) wird bestmöglich dadurch erreicht, dass axial fluchtende Querbolzen (38) aus dem Steckergehäuse (10) herausragen, und sich mittels kurvenscheibenähnlicher Hebel verschieben lassen.
Ragt nur ein Querbolzen (38) aus dem Steckergehäuse (10), kann mittels eines Hebels (7) in einer Nut (39) mit entsprechenden Schaltpositionen verfahren werden.

### Nummerierungen:

- 1: Rohrkupplung
- 2: Stecker
- 3: Muffe
- 4: Maschine
- 5: Haken, Flansch
- 6: Hakenschiene
- 7: Betätigungshebel
- 8: Anschlag
- 9: Exzenterrad
- 10: Steckergehäuse
- 11: Bohrungen
- 12: Absperrelement, Absperrhülse, steckerseitig
- 13: Dichtring, stirnseitig
- 14: Dichtring, hinten
- 15: innere Hülsenaulweitung
- 16: Puffer
- 17: Rohr, Rohranschluß, steckerseitig
- 18: seitliche Bohrungen, Medienausgänge
- 19: Zylinder-Kolben-Einheit
- 20: Muffengehäuse
- 21: Schmutzschutzhülse
- 22: Rohr, Rohranschluß, muffenseitig
- 23: Absperrelement, Absperrhülse, muffenseitig
- 24: Dichtring, stirnseitig
- 25: Dichtring, hinten
- 26: seitliche Bohrungen, Medienausgange
- 27: innere Hülsenauiweitung
- 28: kegelförmiges Schaftende
- 29: Schaft
- 30: Querbohrung, Medienausgang
- 31: atmosphärischer Leerraum
- 32: Feder
- 33: Feder
- 34: Ausnehmung
- 35: Gewinde
- 36: Exzenter
- 37: Feder
- 38: Querbolzen
- 39: Nut, Führung
- 40: Stirnseite
- 41: Sicherungsseil
- 42: geöffneter Medienkanal

- MP: manuelles Positionieren
- SW: Schlüsselweite

## Patentansprüche

1. Rohrkupplung (1) zum Verbinden und Trennen von medienführenden Rohren, Schläuchen oder dergleichen, umfassend zwei Kupplungshälften, welche sich an sich in einer axialen Richtung erstreckenden jeweiligen ersten und zweiten Rohranschlüssen (17, 22) befinden, einen Stecker (2) und eine Muffe (3), wobei der Stecker (2) ein Steckergehäuse (10) aufweist, welches fest mit dem ersten Rohranschluss (17) verbunden ist, und wobei die Muffe (3) ein Muffengehäuse (20) aufweist, welche fest mit dem zweiten Rohranschluss (22) verbunden ist, wobei der Stecker (2) ein erstes hülsenförmiges Absperrelement (12) aufweist, welches den ersten Rohranschluss (17) umgibt und entlang der axialen Richtung zwischen einer Absperrposition und einer Aufsperrposition verschiebbar ist, wobei das erste hülsenförmige Absperrelement (12) in seiner Absperrposition einen den ersten Rohranschluss (17) umfassenden, durch eine Aufweitung des ersten hülsenförmigen Absperrelements (12) gebildeten, ringförmigen Raum (15) begrenzt, wobei der erste Rohranschluss (17) einen ersten stirnseitigen flachen Endbereich und eine Vielzahl von ersten Medienausgängen (18) aufweist, die sich zwischen einem inneren Durchflusskanal (42) des Rohranschlusses (17) und dem ringförmigen Raum (15) erstrecken, wobei das erste hülsenförmige Absperrelement (12) in dem abgesperrten Zustand ein unter Druck stehendes Medium enthält, und ferner wobei die Muffe (3) ein zweites hülsenförmiges Absperrelement (23) aufweist, welches entlang der axialen Richtung zwischen einer Absperrposition und einer Aufsperrposition verschiebbar ist und den zweiten Rohranschluss (22) umgibt, wobei das zweite hülsenförmige Absperrelement (23) einen verjüngten Schaft (29) aufweist, der einen zweiten stirnseitigen flachen Endbereich aufweist, wobei in seiner Absperrposition das zweite hülsenförmige Absperrelement (23) einen zweiten ringförmigen Raum (27) mit dem Schaft (29) begrenzt, wobei der zweite Rohranschluss (22) eine Vielzahl von zweiten Medienausgängen (26) aufweist, die in Verbindung mit dem inneren Durchflusskanal des Rohranschlusses (22) sind, wobei das zweite hülsenförmige Absperrelement (23) in dem abgesperrten Zustand die zweiten Medienausgänge (26) verschließt und das unter Druck stehende Medium in dem inneren Durchflusskanal (42) eindämmt, und ferner wobei die Rohrkupplung (1) Verbindungsmittel aufweist um den Stecker (2) und die Muffe (3), und somit den ersten Rohranschluss (17) und den zweiten Rohranschluss (22) , mit ihren stirnseitigen Endfächen ohne nennenswerten Zwischenraum zusammen zu halten und Verschiebungen auseinander in die axiale Richtung zu vermeiden, und wobei das steckerseitige erste hülsenförmige Absperrelement (12) von Exzentern (36), welche mit einem Exzenterrad (9) verbunden sind, in einer Ausnehmung (34) gehalten ist, so dass mittels Verdrehens des Exzenterrads (9) in einem Gewinde (35) der Exzenter (36) das steckerseitige erste hülsenförmige Absperrelement (12) entlang der axialen Richtung in die Aufsperrposition verschiebt, in welcher das unter Druck stehende Medium nicht mehr im ersten ringförmigen Raum (15) eingedämmt ist, wobei auch das zweite hülsenförmige Absperrelement (23) in seine Aufsperrposition verschoben wird, in welcher die zweiten Medienausgänge (26) nicht mehr von dem zweiten Absperrelement (23) verschlossen sind, so dass das unter Druck stehende Medium zwischen dem ersten Rohranschluss (17) und zweiten Rohranschluss (22) fliessen kann.

2. Rohrkupplung (1) nach Anspruch 1,
**dadurch gekennzeichnet,**
**dass** das steckerseitige erste hülsenförmige Absperrelement (12), eine innere Hülsenaufweitung (15), mit mindestens zwei, diese Hülsenaufweitung beidseitig begrenzende, engere Dichtflächen (13,14), aufweist.

3. Rohrkupplung (1) nach Anspruch 2,
**dadurch gekennzeichnet,**
**dass** die Dichtflächen (13) und (14) den gleichen, oder den in etwa gleichen Durchmesser aufweisen.

4. Rohrkupplung (1) nach Anspruch 1 bis 3,
**dadurch gekennzeichnet,**
**dass** diese Verbindungsmittel Haltemittel, wie Haken (5) und Hakenschiene (6) enthalten die sich so manuell positionieren (MP) lassen, dass ihre Stirnseiten axial fluchtend gegeneinanderliegen, und sie sich nicht axial voneinander entfernen können.

5. Rohrkupplung (1) nach Anspruch 4,
**dadurch gekennzeichnet,**
**dass** die Kupplungshälften (2) und (3) bei diesem manuellem Positioniervorgang (MP), vertikal aneinander vorbeigestreift werden, und dabei evtl. an den Stirnseiten (40) anliegende Verschmutzungen selbstreinigend beiseite geschoben werden.

6. Rohrkupplung (1) nach einem oder mehreren der vorhergehenden Ansprüche,
**dadurch gekennzeichnet,**
**dass** das zweite hülsenförmige Absperrelement (23) eine innere Hülsenaufweitung (27) und mindestens zwei Dichtflächen (24) und (25) im Bereich des inneren, engeren, hinteren Endes aufweist.

7. Rohrkupplung (1) nach Anspruch 6,
**dadurch gekennzeichnet,**
**dass** die zwei Dichtflächen (24) und (25) des zweiten hülsenförmigen Absperrelementes (23), gleich grosse, oder in etwa gleich grosse Durchmesser aufweisen.

8. Rohrkupplung (1) nach Anspruch 7,
**dadurch gekennzeichnet,**
**dass** die Dichtflächen (24) und (25) so angeordnet sind, dass in einer anderen möglichen Endposition des zweiten hülsenförmigen Absperrelements (23) die zweiten Medienausgänge (26) ausserhalb, weitere Medienausgänge (30) des zweiten hülsenförmigen Absperrelements (23) jedoch innerhalb der zwei Dichtflächen (24) und (25) liegen.

9. Rohrkupplung (1) nach einem der Ansprüche 1 bis 8,
**dadurch gekennzeichnet.**
**dass** die Betätigung zur Bewegung des zweiten Absperrelements (12) nur im Zustand manuell positionierter (MP) Kupplungshälften (2,3) ermöglicht ist.

## Claims

1. Pipe coupling (1) for connecting and disconnecting media-bearing pipes, hoses or the like, comprising two coupling halves, which are located, respectively, on first and second pipe connections (17, 22) extending in a radial direction, a plug (2) and a socket (3), wherein the plug (2) has a plug housing (10), which is non-detachably connected to the first pipe connection (17), and wherein the socket (3) has a socket housing (20), which is non-detachably connected to the second pipe connection (22), wherein the plug (2) has a first sleeve-shaped shut-off element (12), which surrounds the first pipe connection (17) and is displaceable along the axial direction between a shut-off position and an unlock position, wherein the first sleeve-shaped shut-off element (12) borders in its shut-off position a ring-shaped space (15) comprising the first pipe connection (17) and formed by an expansion of the first sleeve-shaped shut-off element (12),
wherein the first pipe connection (17) has a first front-side flat end region and a plurality of first media outlets (18) that extend between an internal flow channel (42) of the pipe connection (17) and the ring-shaped space (15), wherein the first sleeve-shaped shut-off element (12) contains in the shut-off state a pressurised medium, and furthermore wherein the socket (3) has a second sleeve-shaped shut-off element (23), which is displaceable along the axial direction between a shut-off position and an unlock position and surrounds the second pipe connection (22), wherein the second sleeve-shaped shut-off element (23) has a tapered shaft (29) that has a second front-side flat end region, wherein the second sleeve-shaped shut-off element (23) borders in its shut-off position a second ring-shaped space (27) with the shaft (29), wherein the second pipe connection (22) has a plurality of second media outlets (26) that are in connection with the internal flow channel of the pipe connection (22), wherein the second sleeve-shaped shut-off element (23) locks in the shut-off state the second media outlets (26) and stems the pressurised medium in the internal flow channel (42), and furthermore wherein the pipe coupling (1) has connection means for holding together the plug (2) and the socket (3), thus the first pipe connection (17) and the second pipe connection (22), with its front-side end faces without noteworthy interspace and for preventing displacements apart in axial direction, and wherein the plug-side first sleeve-shaped shut-off element (12) is held by eccentrics (36), which are connected with an eccentric wheel (9), in a recess (34) so that the eccentric (36) displaces by means of twisting the eccentric wheel (9) in a thread (35) the plug-side first sleeve-shaped shut-off element (12) along the axial direction into the shut-off position, in which the pressurised medium is not stemmed in the first ring-shaped space (15) anymore, wherein the second sleeve-shaped shut-off element (23) is also displaced into its unlock position, in which the second media outlets (26) are not locked by the second shut-off element (23) anymore so that the pressurised medium can flow between the first pipe connection (17) and the second pipe connection (22).

2. Pipe coupling (1) according to claim 1, **characterised in that** the plug-side first sleeve-shaped shut-off element (12) has an internal sleeve expansion (15) with at least two narrower sealing faces (13, 14) bordering said sleeve expansion on both sides.

3. Pipe coupling (1) according to claim 2, **characterised in that** the sealing faces (13) and (14) have the identical or approximately identical diameter.

4. Pipe coupling (1) according to claim 1 to 3, **characterised in that** said connection means contain holding means such as hook (5) and hook rail (6) that can be manually positioned (MP) as such that their front sides are axially aligned opposite each other and they cannot axially move away from one another.

5. Pipe coupling (1) according to claim 4, **characterised in that** the coupling halves (2) and (3) are grazed past one another vertically during said manual positioning process (MP), and contaminants present on the front sides (40) are possibly pushed aside in a self-cleaning manner during this process.

6. Pipe coupling (1) according to one or several of the preceding claims, **characterised in that**
the second sleeve-shaped shut-off element (23) has an internal sleeve expansion (27) and at least two sealing faces (24) and (25) in the region of the internal, tighter, rear end.

7. Pipe coupling (1) according to claim 6, **characterised in that** the two sealing faces (24) and (25) of the second sleeve-shaped shut-off element (23) have diameters of equal or approximately equal size.

8. Pipe coupling (1) according to claim 7, **characterised in that** the sealing faces (24) and (25) are arranged as such that in another possible end position of the second sleeve-shaped shut-off element (23) the second media outlets (26) are located outside of, yet further media outlets (30) of the second sleeve-shaped shut-off element (23) inside of the two sealing faces (24) and (25).

9. Pipe coupling (1) according to one of the claims 1 to 8, **characterised in that** the actuation for moving the second shut-off element (12) is only enabled in the state of manually positioned (MP) coupling halves (2,3).

## Revendications

1. Accouplement tubulaire (1) destiné au raccordement et à la séparation de conduites et tuyaux conducteurs de fluides ou équivalents, comprenant deux moitiés d'accouplement qui se trouvent respectivement au niveau des premier et deuxième raccords de tuyauterie (17, 22) s'étendant dans une direction axiale, un connecteur mâle (2) et un connecteur femelle (3), **caractérisé en ce que** le connecteur mâle (2) présente un boîtier de connecteur mâle (10) qui est solidaire du premier raccord de tuyauterie (17), et **caractérisé en ce que** le connecteur femelle (3) présente un boîtier de connecteur femelle (20) qui est solidaire du deuxième raccord de tuyauterie (22), **caractérisé en ce que** le connecteur mâle (2) présente un élément d'obturation (12) en forme de manchon qui entoure le premier raccord de tuyauterie (17) et qui peut coulisser le long de la direction axiale entre une position d'obturation et une position d'ouverture, **caractérisé en ce que** le premier élément d'obturation (12) en forme de manchon délimite, dans sa position d'obturation, un espace de forme annulaire (15) entourant le premier raccord de tuyauterie (17) et formé par un élargissement du premier élément d'obturation (12) en forme de manchon,
**caractérisé en ce que** le premier raccord de tuyauterie (17) présente une première zone d'extrémité plate à l'avant et une pluralité de premières sorties de fluide (18) qui s'étendent entre un canal d'écoulement interne (42) du raccord de tuyauterie (17) et l'espace de forme annulaire (15), **caractérisé en ce que** le premier élément d'obturation (12) en forme de manchon contient à l'état obturé un fluide sous pression, et **caractérisé en outre en ce que** le connecteur femelle (3) présente un deuxième élément d'obturation (23) en forme de manchon qui peut coulisser le long de la direction axiale entre une position d'obturation et une position d'ouverture et entoure le deuxième raccord de tuyauterie (22), **caractérisé en ce que** le deuxième élément d'obturation (23) en forme de manchon présente une tige allant en se rétrécissant (29) qui présente une deuxième zone d'extrémité plate à l'avant, **caractérisé en ce que**, dans sa position d'obturation, le deuxième élément d'obturation (23) en forme de manchon délimite avec la tige (29) un deuxième espace de forme annulaire (27), **caractérisé en ce que** le deuxième raccord de tuyauterie (22) présente une pluralité de deuxièmes sorties de fluide (26) qui sont reliées au canal d'écoulement interne du raccord de tuyauterie (22), **caractérisé en ce que** le deuxième élément d'obturation (23) en forme de manchon ferme, à l'état obturé, les deuxièmes sorties de fluide (26) et retient le fluide sous pression dans le canal d'écoulement interne (42), et **caractérisé en outre en ce que** l'accouplement tubulaire (1) présente des moyens de connexion destinés à maintenir en cohésion le connecteur mâle (2) et le connecteur femelle (3), et ainsi le premier raccord de tuyauterie (17) et le deuxième raccord de tuyauterie (22), avec leurs surfaces d'extrémité frontales sans espace intermédiaire notable et à éviter les écartements dans le sens axial, et **caractérisé en ce que** le premier élément d'obturation (12) en forme de manchon du côté du connecteur mâle est maintenu dans un évidement (34) par des excentriques (36) qui sont reliés à une roue d'excentrique (9), de sorte que, par rotation de la roue d'excentrique (9) dans un filetage (35), l'excentrique (36) déplace le premier élément d'obturation (12) en forme de manchon du côté du connecteur mâle le long de la direction axiale en position d'ouverture dans laquelle le fluide sous pression n'est plus retenu dans le premier espace de forme annulaire (15), et caractérisé également **en ce que** le deuxième élément d'obturation (23) en forme de manchon est déplacé dans sa position d'ouverture dans laquelle les deuxièmes sorties de fluide (26) ne sont plus fermées par le deuxième élément d'obturation (23), de sorte que le fluide sous pression peut s'écouler entre le premier raccord de tuyauterie (17) et le deuxième raccord de tuyauterie (22).

2. Accouplement tubulaire (1) selon la revendication 1, **caractérisé en ce que** le premier élément d'obturation (12) en forme de manchon du côté du connecteur mâle présente un élargissement intérieur en forme de manchon (15) avec au moins deux surfaces d'étanchéité plus étroites (13, 14) délimitant des deux côtés cet élargissement en forme de manchon.

3. Accouplement tubulaire (1) selon la revendication 2, **caractérisé en ce que** les surfaces d'étanchéité (13) et (14) présentent le même ou approximativement le même diamètre.

4. Accouplement tubulaire (1) selon la revendication 1 à 3, **caractérisé en ce que** ces moyens de connexion comprennent des moyens de retenue tels qu'un crochet (5) et un rail à crochet (6) qui peuvent être positionnés manuellement (MP) de façon à ce que leurs faces frontales soient alignées axialement l'une par rapport à l'autre et qu'elles ne puissent pas s'écarter axialement l'une de l'autre.

5. Accouplement tubulaire (1) selon la revendication 4, **caractérisé en ce que** les moitiés d'accouplement (2) et (3) s'effleurent verticalement pendant l'opération de positionnement manuel (MP) et que, ce faisant, toute saleté éventuellement présente sur les faces frontales (40) est éliminée de manière autonettoyante.

6. Accouplement tubulaire (1) selon l'une ou plusieurs des revendications précédentes, **caractérisé en ce que** le deuxième élément d'obturation (23) en forme de manchon présente un élargissement intérieur en forme de manchon (27) et au moins deux surfaces d'étanchéité (24) et (25) dans la zone de l'extrémité intérieure arrière plus étroite.

7. Accouplement tubulaire (1) selon la revendication 6, **caractérisé en ce que** les deux surfaces d'étanchéité (24) et (25) du deuxième élément d'obturation (23) en forme de manchon présentent le même ou approximativement le même diamètre.

8. Accouplement tubulaire (1) selon la revendication 7,
**caractérisé en ce que** les surfaces d'étanchéité (24) et (25) sont agencées de manière à ce que dans une autre position finale possible du deuxième élément d'obturation (23) en forme de manchon, les deuxièmes sorties de fluide (26) se situent à l'extérieur, mais que les autres sorties de fluide (30) du deuxième élément d'obturation (23) en forme de manchon se situent à l'intérieur des deux surfaces d'étanchéité (24) et (25).

9. Accouplement tubulaire (1) selon l'une des revendications 1 à 8, **caractérisé en ce que**
l'actionnement en vue du déplacement du deuxième élément d'obturation (12) n'est permis qu'en l'état de positionnement manuel (MP) des moitiés d'accouplement (2, 3).
